# FASCICULE DE BREVET EUROPEEN

(11) **EP 3 969 432 B1**
(45) Date de publication et mention de la délivrance du brevet: **23.10.2024**
(21) Numéro de dépôt: 20740703.2
(22) Date de dépôt: 12.05.2020
(51) Int. Cl.: C06B 21/00, B33Y 70/10, C06B 45/00

(54) **GRAINS DE POUDRE PROPULSIVE COMPRENANT DES CANAUX AU MOINS PARTIELLEMENT OBTURES**
TREIBLADUNGSPULVERKORN MIT MINDESTENS TEILWEISE VERSCHLOSSENEN KANÄLEN
PROPELLANT POWDER GRAIN COMPRISING AT LEAST PARTIALLY OBTURATED CHANNELS

(30) Priorité: 13.05.2019 FR 1904963
(43) Date de publication de la demande: 23.03.2022
(73) Titulaire: Eurenco France SAS, 84700 Sorgues (FR)
(72) Inventeur: CUVELIER, Sébastien, 24520 COURS-DE-PILE (FR)
(74) Mandataire: Cabinet Beau de Loménie
(86) Numéro de dépôt international: PCT/FR2020/050781
(87) Numéro de publication internationale: WO 2020/229769

(56) Documents cités:
- WO-A1-2018/167603
- US-A- 3 130 672
- US-A1- 2014 326 370
- US-B2- 7 051 658

## Description

### Domaine de l'invention

Le domaine technique de l'invention est celui des chargements propulsifs pour obus, des grains de poudre et leur préparation.

### Etat de la technique

La propulsion des obus dans une arme à tube est assurée par la combustion d'un chargement de poudre propulsive. Le chargement de poudre propulsive (en matériau énergétique) pour armes à tube de moyen et gros calibres se présente le plus souvent sous la forme d'un vrac de grains cylindriques de poudre (typiquement avec un ratio L (Longueur)/D (Diamètre) de 0,25 à 5 pour un L et D compris entre 1 et 25 mm). Les grains sont pourvus de canaux axiaux débouchant (généralement sept, dix-neuf voire trente-sept canaux). Ces canaux axiaux sont généralement répartis selon une symétrie radiale. Dans un canon appelé arme à tube, on distingue 3 phases bien distinctes de fonctionnement : allumage déflagrant de la charge propulsive suivi de la pressurisation rapide du tube / mise en mouvement du projectile / accélération du projectile jusqu'à son éjection du tube. Le débit de gaz généré par le chargement doit augmenter au fur et à mesure de la progression du projectile dans le tube. Il doit donc être progressif croissant. Le débit de gaz est fonction, d'une part, de la composition des grains de poudre. La composition impose la température de flamme (de combustion) Tc et la loi de vitesse de combustion Vc_{poudre} du grain en fonction de la pression Pc (dans le tube). La vitesse de combustion de la poudre (et donc la pression dans le tube) dépend aussi de la température Ti du grain de poudre, notamment dans les phases d'allumage et de pressurisation. Cette température Ti est variable selon les conditions de stockage de l'obus avant son chargement dans l'arme. La gamme de température Ti opérationnelle des chargements propulsifs est généralement comprise entre Ti_{froid min} = -40 °C et Ti_{chaud max}= 63 °C. La vitesse de combustion de la poudre, et donc le débit de gaz généré par la combustion, augmentent lorsque Ti augmente. Ces variations de vitesse de combustion en fonction de Ti impactent surtout les performances dans la phase d'allumage et de pressurisation. Il peut donc se produire soit une sur-pressurisation à chaud soit une sous-pressurisation à froid conduisant à des dégradations des performances attendues voire de l'arme à tube elle-même. Ainsi, la définition d'une performance optimale à température ambiante peut s'avérer insuffisante à froid et surdimensionnée à chaud.

Le débit de gaz au cours du temps de combustion (évolutif au cours de la combustion) du grain est, d'autre part, imposé par la géométrie des grains de poudre et par le nombre, la géométrie et les dimensions des canaux. La géométrie du grain et les caractéristiques des canaux fixent la surface de combustion et l'épaisseur à brûler du grain. La dimension et le nombre de canaux sont donc deux paramètres de réglage du débit de gaz au cours du temps de combustion de la poudre et donc de la pression dans l'arme à tube.

L'homme du métier sait définir la géométrie d'un grain et les caractéristiques de ses canaux et choisir la composition de poudre de façon à obtenir un débit de gaz à une température Ti donnée. Néanmoins, les profils temporels de débit de gaz accessibles avec les géométries conventionnelles des grains de poudres, du type cylindrique à canaux, sont limités. De plus, la gestion du débit de gaz du chargement de poudre sur la plage de température opérationnelle reste toujours un problème auquel l'homme du métier est confronté.

Les grains de poudre comprenant des canaux débouchant pour armes à tube de moyen et gros calibre sont fabriqués industriellement par des procédés par extrusion en continu. Le mélange des constituants de la poudre est extrudé par une presse verticale ou une vis sans fin. Plus récemment, la demande de brevet WO 2017/164731 a décrit la préparation d'une composition énergétique par un procédé dit de « fabrication additive » qui est également connu sous le nom d'impression 3D. Ce procédé permet a priori la fabrication de grains présentant des géométries plus complexes que celles accessibles par le procédé par extrusion. La demande de brevet WO 2018/167603 décrit par ailleurs l'obtention par fabrication additive de blocs de en matériaux énergétiques composites à liant polybutadiène.

Pour limiter les variations de vitesse de combustion en fonction de Ti, des recherches de compositions à faible sensibilité à la Ti ont été menées. Le brevet US 4416712 décrit par exemple des compositions de poudres pour armes à tube à variation de vitesse limitées en fonction de Ti. Il a par ailleurs été suggéré d'incorporer un additif en surface du grain sur une profondeur de quelques centaines de micromètres afin de limiter les variations de débit de gaz à l'allumage et la pressurisation. Les demandes de brevets US 2012/0138201 et US 2015/0321969 décrivent ainsi des grains de poudre pour armes à tube comprenant une surconcentration surfacique en plastifiant (identique ou non à celui de la composition de base de la poudre) obtenu par imprégnation après extrusion des grains. La demande de brevet FR 2 761 982 décrit des grains de poudre pour générateur de gaz pour airbag comportant une couche externe en une composition énergétique déposée par trempage ou pulvérisation, cette couche externe ayant une vitesse de combustion plus faible que celle de l'âme du grain de poudre. Ces procédés d'incorporation surfacique d'additif ne permettent toutefois pas de contrôler précisément la quantité d'additif incorporée. On observe donc des variations significatives des propriétés de combustion de la poudre selon les lots de fabrication.

La demande de brevet US 2014/326370 et le brevet US 7051658 décrivent des grains de poudres dont les tous les canaux sont obturés par des bouchons d'une même composition. Les matériaux formant les bouchons ont une température de fusion supérieure à la température opérationnelle maximum des grains de poudre. Les bouchons sont constitués quasi-exclusivement de particules agglomérées de matériau inerte. En pratique (cf. les exemples de ces documents), les bouchons sont constitués de graphite ou de mélange graphite/talc. Les particules formant les bouchons sont déposées dans les canaux des grains par agitation des grains en présence d'une faible quantité d'un mélange de particules avec un agent d'agglomération en solution dans un liquide volatile. Après agitation et évaporation du solvant, les grains contenant les bouchons sont séchés à chaud. Après l'étape de séchage, les bouchons adhèrent à la surface des canaux. On comprend donc qu'il s'agit d'un procédé de dépôt global sur un lot de grains de poudre ne pouvant assurer une homogénéité des bouchons (compacité, adhérence à la paroi du canal, état de surface...) contenus dans les grains au sein d'un lot d'un poudre et, a fortiori entre lots de poudres. Le principe de fonctionnement des poudres renfermant les grains avec ce type de bouchons repose sur la variation d'adhérence des bouchons dans les canaux avec la température. A froid, le volume des bouchons et l'adhérence à la surface des canaux sont réduits, et les bouchons sont expulsés des canaux lors de la pressurisation à l'allumage. La surface des canaux est alors libérée augmentant ainsi la surface en combustion de la poudre, en compensation de la baisse de vitesse combustion par rapport à un fonctionnement à température ambiante ou à chaud. En raison de l'hétérogénéité de la qualité des bouchons dans la canaux induits par le procédé global de dépôt et du principe de fonctionnement basé sur des caractéristiques d'adhérence des bouchons dans les canaux, la reproductibilité de fonctionnement, même en moyenne statistique, des poudres n'est pas satisfaisante. De plus les possibilités de réglage balistique d'un lot de poudre sont limitées car les bouchons obturent en totalité les canaux des grains de poudre.

L'homme du métier cherche donc à produire, de façon reproductible, des grains de poudre pour arme à tube qui permettent in fine de régler le profil temporel du débit de gaz avec une grande latitude et avec précision, et/ou d'obtenir un débit de gaz quasi-constant en fonction de la température Ti, et ce, indépendamment de la composition du grain de poudre qui est optimisée pour ses performances balistiques.

### Résumé de l'invention

Il est du mérite de l'inventeur d'avoir mis au point des grains de poudre répondant au cahier des charges susmentionné. L'invention concerne donc, selon un aspect, un grain de poudre qui comporte une pluralité de canaux débouchant ou non, au moins un canal étant partiellement ou complètement obturé par au moins un bouchon, ledit au moins bouchon étant constitué d'un matériau dont la température de fusion T_{f} est supérieure ou égale à la température opérationnelle à chaud maximum (Ti_{chaud max}) du grain de poudre. L'invention concerne également, selon un autre aspect, un procédé de préparation des grains de poudre définis ci-dessus. L'invention concerne en outre, selon un autre aspect, un chargement de poudre propulsive constitué de grains de poudre tels que définis ci-dessus.

### Brève description des figures.

La figure 1 représente un grain de poudre conventionnel, comportant 19 canaux débouchant.
La figure 2 représente un grain de poudre selon l'invention, comportant 19 canaux débouchant, dont 7 canaux (6 périphériques et le canal central) sont obturés, à chacune de leurs extrémités, par un bouchon.
La figure 3 représente une vue du grain de poudre de la figure 2 en transparence partielle sur laquelle on visualise la présence interne des bouchons

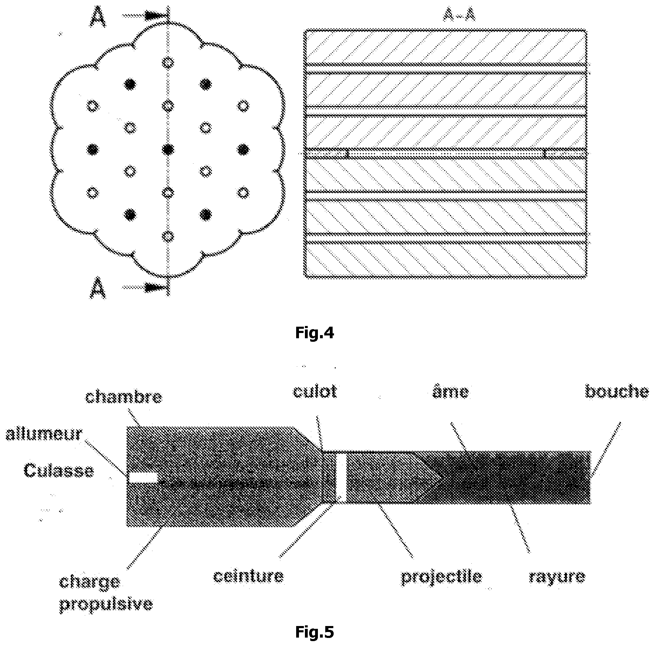

La figure 4 représente une vue du grain de poudre de la figure 2 en coupe sur laquelle on visualise la présence interne des bouchons.
La figure 5 représente l'architecture type d'une arme à tube et de son chargement propulsif.
La figure 6 représente la pression à la culasse, en fonction du temps, générée lors du tir d'un projectile dans une arme à tube en utilisant soit un chargement contenant des grains sans bouchon du type de la figure 1, soit un chargement contenant des grains avec bouchons du type de la figure 2.
La figure 7 représente la vitesse, en fonction du temps, d'un projectile propulsé dans les conditions de la figure 6.
La figure 8 représente l'évolution de la géométrie au cours de la combustion d'un grain sans bouchon du type de la figure 1, et d'un grain avec bouchons du type de la figure 2.
La figure 9 représente la pression à la culasse, en fonction du temps, générée lors du tir d'un projectile dans une arme à tube en utilisant un chargement contenant des grains du type de la figure 1, à différentes températures opérationnelles (Ti) des grains de poudre.
La figure 10 représente la vitesse, en fonction du temps, d'un projectile propulsé dans les conditions de la figure 9.
La figure 11 représente la pression à la culasse, en fonction du temps, générée lors du tir d'un projectile dans une arme à tube en utilisant un chargement contenant des grains du type de la figure 2, à différentes températures opérationnelles (Ti) des grains de poudre.
La figure 12 représente la vitesse, en fonction du temps, d'un projectile propulsé dans les conditions de la figure 11.
La figure 13 représente la pression à la culasse, en fonction du temps, générée lors du tir d'un projectile dans une arme à tube en utilisant un chargement contenant des grains de poudre conformes à l'invention, à différentes températures opérationnelles (Ti) des grains de poudre.
La figure 14 représente la vitesse, en fonction du temps, d'un projectile propulsé dans les conditions de la figure 13.

### Description de l'invention

Selon un aspect, l'invention concerne un grain de poudre qui comporte une pluralité de canaux (de 2 à 37 voire plus, par exemple 7, 19 ou 37) débouchant ou non, au moins un canal étant partiellement ou complètement obturé par au moins un bouchon, ledit au moins bouchon étant constitué d'un matériau dont la température de fusion T_{f} est supérieure ou égale à la température opérationnelle à chaud maximum (Ti_{chaud max}) du grain de poudre. Cette température de fusion Tf est préférentiellement supérieure d'au moins 8°C à la température opérationnelle à chaud maximum (Ti_{chaud max}) afin d'assurer une marge fonctionnelle. De manière avantageuse, la température de fusion Tf est supérieure à 63°C.

La composition des grains de poudre n'est en soi pas originale, et peut être une composition de poudre simple base comprenant de la Nitrocellulose (NC) ; une composition de poudre double base comprenant de la Nitrocellulose (NC) et une huile nitrée telle que la Nitroglycérine (NGL), le dinitrate de triéthylène glycol (TEGDN) ou le dinitrate de diéthylène glycol (DEGDN) ; une composition de poudre multibases comprenant par exemple (NC + NGL + Nitroguanidine (NGU)), (NC + DEGDN + NGU) ou (NC + NGL + plastifiant) ; une composition de poudre (telle que décrite ci-dessus) dopée avec une charge énergétique telle que l'hexogène (RDX) ou l'octogène (HMX) ; ou bien encore une composition de poudre composite (dite aussi poudre LOVA) comprenant une charge énergétique et un liant réticulé, par exemple du type polyuréthane, polyazoture de glycidyle (PAG) et/ou thermoplastique, par exemple du PMMA ou un copolymère éthylène/acétate de vinyle (EAV). Il est possible d'incorporer dans la composition de poudre un ou plusieurs additifs et /ou un ou plusieurs liants thermoplastiques dont la température de fusion est comprise entre 63°C et 120°C et dont la température de transition vitreuse est inférieure à -40°C.

Le grain de poudre selon l'invention comporte donc plusieurs canaux débouchant ou non, dont au moins un canal partiellement ou complètement obturé par au moins un bouchon. Lorsque le grain contient plus d'un bouchon, chaque bouchon peut être constitué d'un même matériau ou de matériaux différents (inflammables et/ou énergétiques), et/ou présenter des longueurs identiques ou différentes. Plusieurs bouchons espacés peuvent être présents dans un même canal. Chaque bouchon a une surface radiale équivalente à celle de son canal de façon à l'obturer, sa longueur est typiquement de 1/100 à 1 fois la longueur du canal. Un bouchon peut donc avoir une longueur inférieure à celle du canal. Il est ainsi tout à fait envisageable qu'au sein d'un même grain : au moins un canal ne comporte pas de bouchon, et/ou au moins un canal soit partiellement obturé par un bouchon (c'est à dire que ledit au moins un canal n'est pas bouché à ses deux extrémités), et/ou au moins deux bouchons soient de compositions différentes, et/ou au moins deux bouchons soient de longueurs différentes, et/ou au moins un canal comporte au moins deux bouchons espacés, de composition identique ou différente. Il faut rappeler ici que le procédé par imprégnation décrit dans la demande de brevet US 2014/326370 et le brevet US 7051658 ne permet pas de réaliser ces variations constitutives des grains avec bouchons.

Comme indiqué ci-dessus, ledit au moins un bouchon est constitué d'un matériau dont la température de fusion T_{f} est supérieure ou égale à la température opérationnelle à chaud maximum (Ti_{chaud max}) du grain de poudre, à savoir généralement supérieure à 63°C (T_{f} > 63°C).

Selon un mode de réalisation, le ou les bouchon(s) qui obturent partiellement ou complètement ledit au moins un canal est (sont) constitué(s) d'un matériau de composition identique à celle du grain de poudre, telle que décrite ci-dessus (composition simple base, double base, multibases, dopée, composite). Dans ce mode de réalisation la vitesse de combustion du bouchon est identique à celle du grain de poudre (Vc_{bouchon} = Vc_{poudre}). Le choix du nombre de bouchons, de leur positionnement et de leur longueur permettent de diminuer la surface de combustion initiale (et donc le débit de gaz) par rapport à un grain à canal(aux) débouchant(s) ou non sans bouchon, au moins un canal n'étant pas complètement obturé : la combustion de chaque bouchon lorsque le front de flamme l'atteint a pour effet de déboucher partiellement ou en totalité un canal et d'augmenter ainsi progressivement la surface de combustion et donc le débit de gaz. Selon un autre mode de réalisation, le ou les bouchon(s) qui obturent partiellement ou complètement ledit au moins un canal est (sont) constitué(s) d'un matériau de composition différente de celle du grain de poudre.

Selon un autre mode de réalisation, dans lequel la pluralité de canaux (formant en partie le grain de poudre) contient plus d'un bouchon, au moins un bouchon obturant partiellement ou complètement ledit au moins un canal est constitué d'un matériau de composition identique à celle du grain de poudre (telle que rappelée ci-dessus), et au moins un bouchon obturant partiellement ou complètement ledit au moins un canal est constitué d'un matériau de composition différente de celle du grain de poudre.

Lorsqu'au moins un bouchon est constitué d'un matériau de composition différente de celle du grain de poudre, ledit matériau est avantageusement un matériau inflammable (inflammable au sens de la classification SGH ONU - Système Général Harmonisé de classification et d'étiquetage des produits chimiques) ou un matériau énergétique (au sens explosif = matériau de division de risque 1 au sens de la classification SGH ONU - Système Général Harmonisé de classification et d'étiquetage des produits chimiques). A toutes fins utiles, il sera précisé ici que ce matériau ne contient ni graphite, ni talc, ni mélange de graphite et de talc.

Comme indiqué ci-dessus, le matériau de composition différente de celle du grain de poudre peut être un matériau énergétique, celui-ci renfermant un liant énergétique par exemple de type NC, une charge énergétique du type RDX, HMX, EDNA (éthylène dinitramine), NGU ou GUDN (dinitramide de guanylurée) et éventuellement un plastifiant énergétique du type NGL, DEGDN ou TEGDN. La vitesse de combustion du bouchon en un tel matériau est alors plus élevée que celle du grain de poudre (Vc_{bouchon} > Vc_{poudre}).

Le matériau de composition différente de celle du grain de poudre peut également être un matériau inflammable, avantageusement un matériau plastifié dérivé de cellulose ou un matériau thermoplastique tel que la vitesse de combustion du bouchon est inférieure à celle du grain de poudre (Vc_{bouchon} < Vc_{poudre}). A titre d'exemple de matériau plastifié dérivé de cellulose susceptible d'être utilisé dans le cadre de l'invention, on peut citer de l'éthylcellulose (EC) plastifiée ou de la nitrocellulose à usage industriel plastifiée (avec des plastifiants de type citrate de tributyle (TBC) ou citrate d'acétyle de triéthyle (ATEC)). A titre d'exemple de matériau thermoplastique susceptible d'être utilisé dans le cadre de l'invention, on peut citer :
- les thermoplastiques développés dans le domaine médical pour orthèses, prothèses ou attelles, du type PL16232 ou PL16016 commercialisés par la société PROTEOR ; une polycaprolactone du type CAPA^{®} 6800 commercialisée par la société Perstorp ; un polyuréthane du type UREPAN^{®} 643 G commercialisé par la société RheinChemie ; un thermoplastique du type de ceux commercialisés par la société Thermowoks sous la dénomination Whitemorph^{®}.
- les thermoplastiques dont la température de transition vitreuse (appelée par la suite Tg_{bouchon}) est supérieure à la température opérationnelle à froid minimum (Ti_{froid min}) du grain de poudre, à savoir généralement -40°C (-40 °C < Tg_{bouchon}). Parmi ces thermoplastiques, on utilisera avantageusement :
(i) les cires naturelles d'origine animale (cire d'abeille, cire de laine ) ou végétale (cires de Carnauba, cire de Candellila, cire de Sumacs, cire de son de riz) ; les cires minérales de type paraffine ; les cires synthétiques microcristallines ou polymériques (cires de polyéthylène, cires de polyoxyde d'éthylène, cires Fischer-Tropsch), les gommes-laques issu de la sécrétion de cochenille (aussi appelées shellac) ; les poix telle que la colophane obtenue après distillation de la térébenthine ; du propolis (mortier de ruches d'abeilles) ; des cires synthétiques dentaires ; et les mélanges des matériaux susnommés.
La température de fusion de matériaux thermoplastiques (i) est indiquée dans le tableau ci-dessous ; la température de transition vitreuse de ces matériaux est typiquement comprise entre 10°C et 20°C. On comprend que les valeurs de Tf données peuvent varier de quelques degrés en fonction de l'origine des produits.

**Tableau 1**

| | Tf (°C) |
|---|---|
| Cire d'abeille | 65 |
| Cire de Carnauba | 85 |
| Paraffine | 50 à 70 |
| Cire synthétique microcristalline | 80 à 90 |
| Cire de polyéthylène | 90 à 120 |
| Cire de poly(oxyde d'éthylène) | 140 |
| cire Fischer-Tropsch | 80 à 120 |
| Colophane | 73 à 83 |
| Cire de Candellila | 70 |
| Cire de son de riz | 78 |
| Propolis | 70 |
| Gomme laque | 78 à 80 |
| 50% cire de restauration (80% paraffine/20% cire microcristalline)/50% gomme laque | 69 |
| 50% paraffine/25% gomme laque/25% colophane | 71 |
| 25% cire de laine/25% paraffine/25% cire de Candellila/25% Colophane | 65 |

(ii) les mélanges de matériau(x) du (i) avec un ou plusieurs matériau(x) thermoplastique(s) à température de transition vitreuses Tg < -40 °C qui permet(tent) d'abaisser la température de transition vitreuse (des matériaux (i)). Des exemples de tels matériaux thermoplastiques sont donnés ci-dessus.

A titre d'exemple de mélange (ii) on peut citer un mélange de propolis et de polycaprolactone CAPA^{®} 6800.

Dans le cas de bouchons constitués de matériaux thermoplastiques :
- à une température opérationnelle Ti inférieure à Tg_{bouchon}, typiquement inférieure à 20°C voire 0 °C, le bouchon est à l'état vitreux fragile, et le bouchon se brise (par fissuration ou fragmentation) lors de la montée rapide (du type déflagration) en pression à l'allumage du chargement, libérant ainsi la surface de combustion du canal, augmentant ainsi le débit de gaz;
- à une température Ti supérieure à Tg_{bouchon}, le bouchon présente des propriétés élastiques suffisantes pour résister mécaniquement à la montée en pression rapide à l'allumage, et le bouchon ne se brise pas. La diminution du volume du bouchon par combustion libère peu à peu la surface de combustion du canal du grain. Le débit de gaz est ainsi réduit dans la phase de pressurisation de l'arme à tube.

Selon la température Ti, les canaux obturés ou partiellement obturés vont donc se déboucher soit rapidement par fissuration/fragmentation du(des) bouchons soit lentement par combustion du(des) bouchons. On obtient ainsi un pilotage de la surface de combustion à l'allumage du grain, donc de la pression maximale dans l'arme, pendant la phase de pressurisation en compensation de la variation de la vitesse de combustion Vc_{poudre} de la poudre selon la température Ti. En limitant l'effet de surpression avec l'augmentation de Ti, il est donc possible d'utiliser pour un même chargement des compositions plus énergétiques, et donc de s'approcher pour toute la plage Ti de température de fonctionnement de la pression maximale admissible par le tube de l'arme. Comme on l'aura compris à la lecture de ce qui précède, l'invention apporte une grande latitude de réglage du débit de gaz du grain de poudre :
- tout d'abord, par le choix de la composition du grain de poudre, de la géométrie du grain de poudre, du nombre de ses canaux, de la position radiale de chaque canal, de la géométrie de chaque canal. Les canaux peuvent être débouchant ou non débouchant, de section circulaire ou non, éventuellement variable sur leur longueur, et de longueur droite ou courbe, pour éventuellement former des structures complexes en hélice(s), en labyrinthe(s), en étages en colimaçon ;
- et, en sus, par le choix du nombre de canaux comportant au moins un bouchon, du nombre de bouchons par canaux, des longueurs des bouchons, des positions de bouchon dans les canaux et des compositions des bouchons (notamment la vitesse de combustion du bouchon Vc_{bouchon}).

L'invention permet également d'augmenter les performances de l'arme à tube sur l'ensemble de gamme de température Ti. Selon la nature du(des) matériau(x) constituant le au moins un bouchon, le au moins un canal obturé (partiellement ou totalement) va se déboucher plus ou moins rapidement pilotant la surface de combustion du grain et ainsi le débit de gaz. La contribution du bouchon à la génération de gaz propulsif est donc fonction du(des) matériau(x) qui le compose(nt). Cette contribution sera plus forte si le bouchon est en matériau énergétique que s'il est en matériau inflammable.

On comprend que l'invention et ses applications peuvent concerner toutes compositions de grains de poudre et de bouchons qui permettent d'assurer les modes de fonctionnement ci-avant décrits.

Les grains de poudre conformes à l'invention peuvent être agrégés sous forme de bloc de plus grande dimension que les grains pour chargement en vrac (blocs cylindriques de typiquement L (longueur) = 50 à 200 mm et D (diamètre) = 50 à 200 mm). De tels blocs comprennent des canaux débouchant ou non, les canaux étant munis, pour au moins un d'entre d'eux, d'au moins un bouchon tel que défini précédemment. On comprend que ces blocs peuvent remplacer sur le plan fonctionnel un chargement conventionnel en vrac de grains de poudre. On comprend aussi que l'invention concerne des blocs à un seul canal, muni d'au moins un bouchon.

Les grains et blocs selon l'invention offrent donc une grande latitude de réglage du profil de débit de gaz de la poudre. Les grains et blocs de l'invention permettent aussi un contrôle du débit de gaz selon la température Ti initiale de la poudre dans la phase d'allumage et de pressurisation.

Ainsi, selon un autre aspect, l'invention concerne un chargement de poudre propulsive constitué de grains ou de blocs tels que décrits ci-dessus.

Selon un autre aspect, l'invention concerne un procédé de préparation des grains de poudre décrits ci-dessus.

Selon un mode de réalisation, les bouchons peuvent être introduits à l'état pâteux (au moyen d'une seringue dans les canaux d'un grain de poudre obtenu par extrusion. Les pâtes sont introduites à chaud si leur composition comprend un liant thermoplastique et se solidifie par refroidissement in situ pour former le bouchon. Si la composition du liant est un polymère réticulable, l'agent de réticulation est introduit simultanément à la pâte, de façon à obtenir un bouchon solide après réticulation in situ du liant. La pâte peut être aussi constituée de charges en présence d'un solvant, le bouchon solide se formant alors après évaporation in situ du solvant.

Selon un autre mode de réalisation, adapté pour une mise en oeuvre industrielle, on utilise le procédé de fabrication additive (impression 3D) pour la préparation des grains de poudre. Les ingrédients de la poudre, d'une part, et ceux des bouchons, d'autre part, sont préparés individuellement puis mélangés en totalité ou par parties séparées, et se présentent sous la forme de pâtes à injecter dans les buses de dépôt du dispositif de fabrication additive.

Les pâtes composantes du grain sont obtenues par ajout, aux ingrédients, d'additifs de mise en oeuvre du procédé, tels, selon une variante, au moins un solvant conventionnel ou, selon une autre variante, au moins un thermoplastique à basse température de ramollissement/fusion, typiquement de 63°C à 100°C, compatible avec le procédé de fabrication additive par chauffage dit « Fused Filament Fabrication (FFF)». Ledit au moins un thermoplastique, assurant le rôle de liant dans la composition du grain de poudre, doit aussi convenir pour assurer les propriétés mécaniques des grains de poudre à froid, et donc conserver un comportement élastique pour des températures au moins inférieures à Ti_{froid} = -40°C. Les thermoplastiques à basse température de ramollissement/fusion, développés dans le domaine médical pour orthèses, prothèses ou attelles, du type PL16232 ou PL16016 de la société PROTEOR, le thermoplastique polycaprolactone CAPA^{®} 6800 de la société Perstorp, le polyuréthane UREPAN^{®} 643 G commercialisé par la société RheinChemie, le thermoplastique Whitemorph^{®} commercialisé par la société Thermowoks conviennent plus particulièrement. Dans le premier cas, avec le procédé en solvant, la solidification du(des) matériau(x) déposé(s) est obtenue par évaporation du solvant ; dans le second cas, avec le procédé FFF utilisant ledit thermoplastique à basse température de ramollissement/fusion, la solidification du(des) matériau(x) déposé(s) est obtenue par refroidissement.

Les pâtes composantes du(des) bouchons sont constituées pour la mise en œuvre du procédé FFF soit du matériau seul du bouchon lorsque sa température de fusion et sa rhéologie sont compatibles avec la mise en œuvre du procédé, soit du matériau du bouchon en mélange avec le même au moins un thermoplastique à basse température de ramollissement/fusion que celui utilisé pour la pâte des composants de la poudre.

On comprend donc que lorsque le grain selon l'invention est obtenu par le procédé de fabrication additive de type FFF, ledit au moins un thermoplastique à basse température de ramollisement/fusion nécessaire à la mise en œuvre du procédé se retrouve dans la composition du grain et éventuellement du(des) bouchons. Il n'est pas exclu que lorsque le bouchon a pour unique fonction de diminuer le débit de gaz du grain de poudre en fonction de la température Ti, il soit uniquement ou principalement constitué dudit thermoplastique.

Contrairement aux procédés décrits dans l'art antérieur, les procédés de réalisation de grains avec bouchons utilisant une seringue ou la fabrication additive sont adaptés pour l'obtention de l'ensemble des configurations de grains avec bouchons selon l'invention (bouchons de compositions différentes au sein d'un même grain, de différentes longueurs, espacés au sein d'un même canal, présents uniquement dans certains canaux du grain...). L'invention sera mieux comprise à l'aide des exemples ci-après donnés à titre purement illustratif.

### Exemple 1

Cet exemple porte sur la modification du débit de gaz au cours du temps induit par la présence de bouchons dans un grain de poudre.

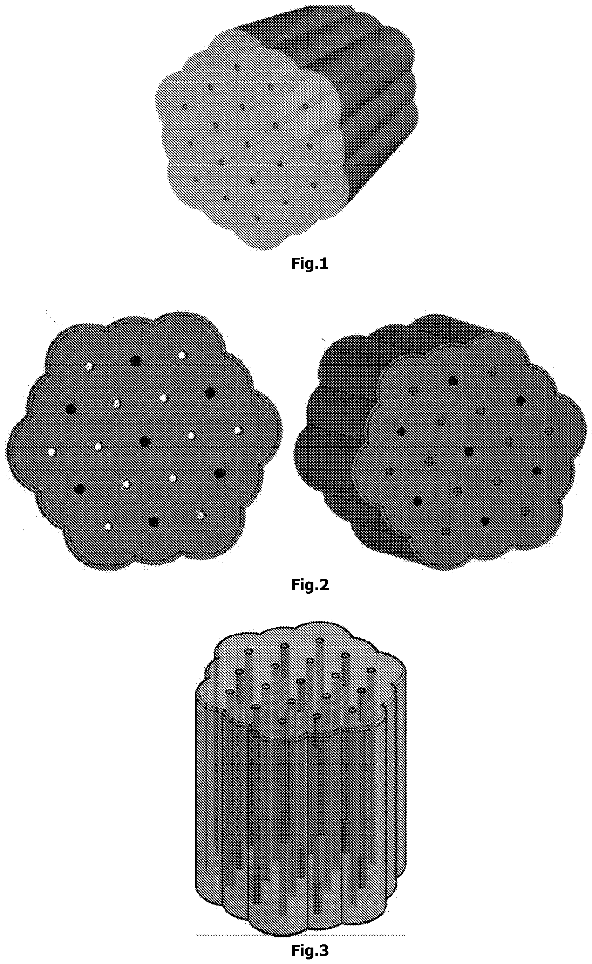

Le chargement de référence A est composé de grains de poudre avec canaux débouchant, sans bouchon. Il s'agit de grains de géométrie conventionnelle dit 19T en rosette telle que montré sur la figure 1. Les caractéristiques de géométries et de composition de ces grains conventionnels sont données dans le tableau suivant.

**Tableau 2**

| Géométrie | |
|---|---|
| Longueur | 16,30 mm |
| Diamètre extérieur | 14,29 mm |
| Diamètre des canaux | 0,41 mm |
| Epaisseur à brûler | 2,04 mm |

| **Composition (massique)** | |
|---|---|
| Nitrocellulose | 34,9% |
| Dinitrate de diéthylène glycol | 22,2% |
| Nitroguanidine | 32,6% |
| Hexogène | 7,6% |
| Additifs | 2,7 % |
| **Masse volumique** | 1,622 g/cm³ |

Le chargement B selon l'invention est constitué de grains avec bouchons. Ces grains du chargement B ont les mêmes géométries et composition que le chargement A de référence et comportent de plus 14 bouchons, de même composition que celle des grains. Les bouchons sont disposés par deux en face à face aux extrémités de 7 canaux selon la disposition de la figure 2. Les 7 canaux bouchés sur 12,52% de leur longueur totale, correspondant à deux bouchons occupant 6,26% de leur longueur (longueur d'un bouchon égale à la moitié de l'épaisseur à brûler) à chaque extrémité.

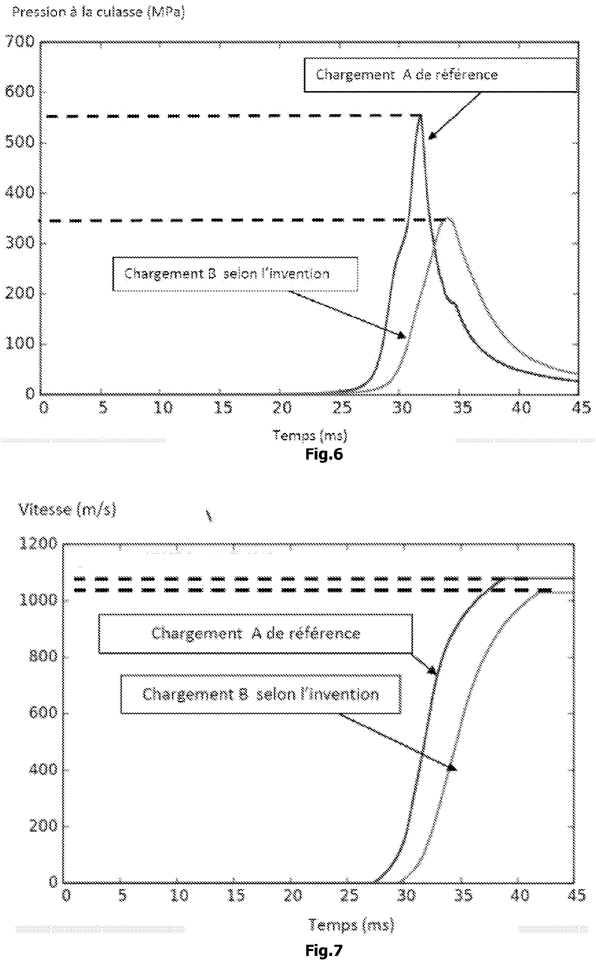

En référence à la figure 6 qui présente le calcul de la pression à la culasse à une température Ti égale à 21 °C, la pression obtenue avec le chargement B selon l'invention est plus faible en début de combustion que celle du chargement A de référence, tout en conservant un profil évolutif croissant. La pression maximale pour le chargement A est d'environ 550 MPa et pour le chargement B de 350 MPa. Pour le chargement B, on observe un prolongement de la pressurisation alors que celle du produite par le chargement A de référence décroît rapidement, ce prolongement étant provoqué par l'ouverture des canaux initialement obturés au fur et à mesure la combustion des bouchons.

En référence à la figure 7 qui compare les vitesses du projectile dans l'arme à tube, on observe une diminution de la vitesse maximale du projectile dans le tube pour le chargement B par rapport à celle obtenue avec le chargement A.

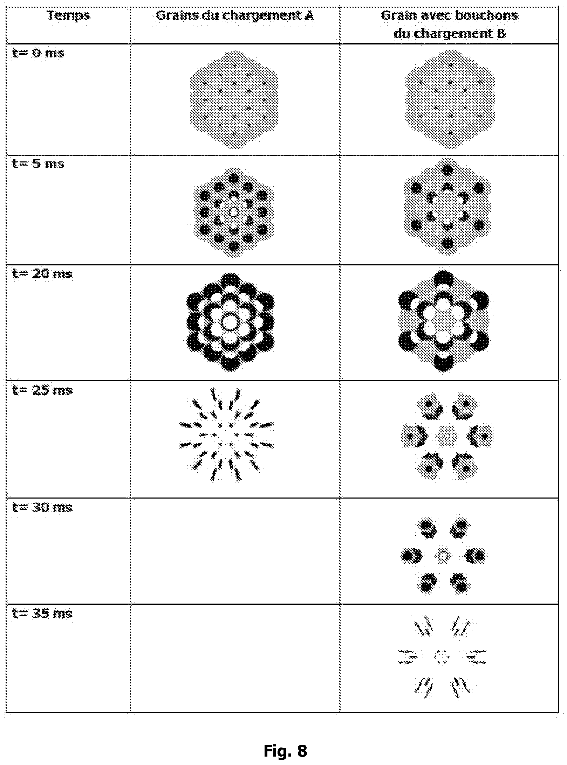

La figure 8 montre l'évolution de la géométrie au cours de la combustion d'un grain du chargement A et d'un grain du chargement B. Après un temps de 20 ms, les 14 bouchons du grain du chargement B ont entièrement brûlés ce qui libère la surface interne résiduels des 7 canaux initialement bouchés à leurs extrémités. L'effet recherché d'une grande latitude de réglage de la pression maximale de pression dans l'arme à tube pour un même chargement avec et sans bouchon de l'invention est donc démontré.

### Exemple 2

Le chargement C selon l'invention est de même architecture que celui du chargement de type B de l'exemple 1 comprenant 14 bouchons. La composition des grains du chargement C est la même que celle des grains du chargement A de référence. Les bouchons sont constitués d'un mélange de propolis et de polycaprolactone CAPA^{®} 6800 assurant une température de transition vitreuse Tg_{bouchon} < 21 °C.

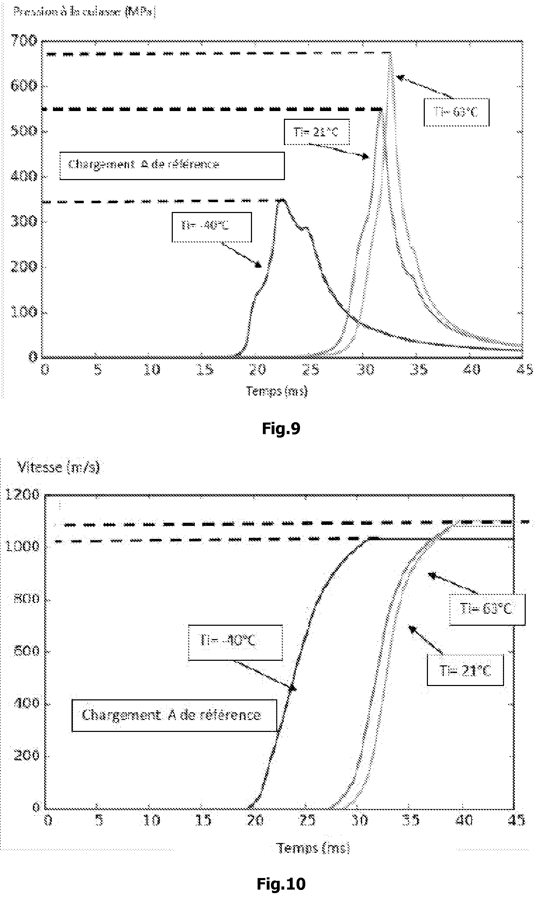

En référence à la figure 9, les courbes de pression à la culasse en fonction du temps du chargement A de référence sans bouchons montrent l'augmentation de pression maximale dans l'arme à tube avec l'augmentation de Ti : Pmax ∼ 350 MPa pour Ti = -40 °C, Pmax ∼ 550 MPa pour Ti = 21 °C, Pmax ∼ 650 MPa pour Ti = 63 °C. La variation de pression maximale s'amplifie quand Ti < température ambiante, et est relativement limitée quand Ti> température ambiante. Ces variations de pression dans l'arme en fonction de Ti entraînent une augmentation de vitesse du projectile avec la Ti comme montré sur la figure 10.

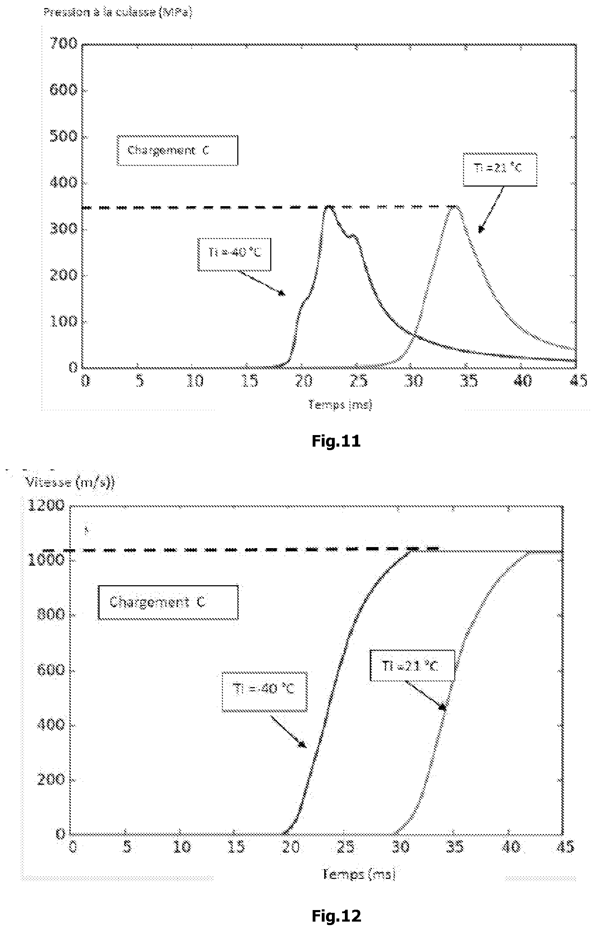

En référence à la figure 11, pour la pression maximale à la culasse, les pressions maximales obtenues avec le chargement C sont identiques à froid Ti = -40°C et à température ambiante Ti = 21°C, et sont de l'ordre d'environ 350 MPa. En référence à la figure 12, les vitesses maximales de projectile sont sensiblement équivalentes à froid et à température ambiante. Cet effet d'équivalence de fonctionnement en température pour un même chargement (selon l'invention) s'expliquent par le fait que les bouchons du chargement C se brisent lors de la déflagration d'allumage en libérant les canaux à une température froide Ti < 21°C (correspondant à Tg_{bouchon} ≤ 21°C) et conservent leur propriété élastique à Ti ≥ 21°C. A Ti = 21°C, les bouchons obturent donc les canaux et brûlent en libérant progressivement les canaux. A Ti=-40°C, les bouchons se brisent à l'allumage et libèrent la surface des canaux initialement bouchés.

### Exemple 3

Le chargement D selon l'invention est de même architecture que celui du chargement B de l'exemple 1 comprenant 14 bouchons. La composition des grains du chargement D est la même que celle des grains du chargement A de référence. Les bouchons sont constitués d'un matériau dont la température de transition vitreuse est comprise entre 21°C et 63°C. Le matériau susceptible de présenter ces propriétés pour ces températures est par exemple le propolis.

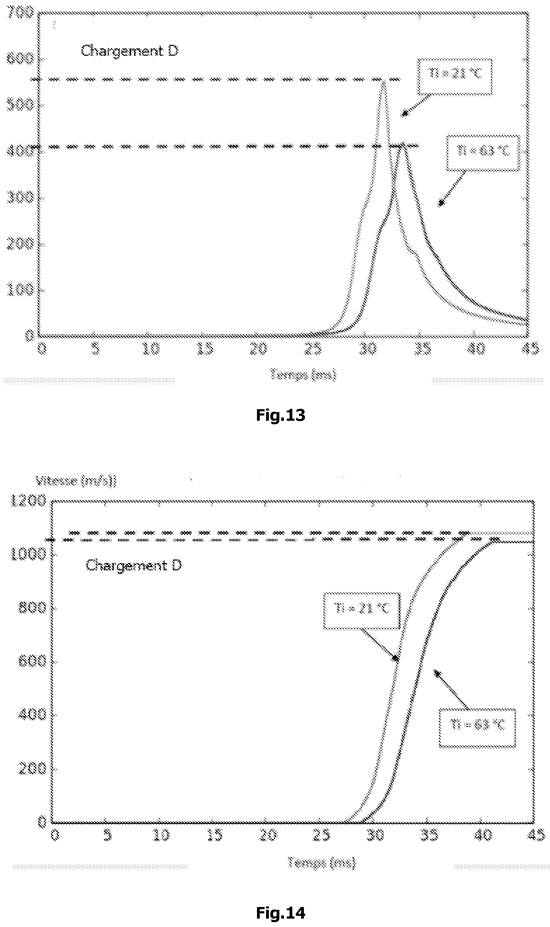

En référence à la figure 13, la pression maximale à la culasse obtenue avec le chargement D est d'environ 550 MPa à la température Ti = 21°C, cette pression est nettement supérieure à celle obtenue à la température Ti = 63°C qui est d'environ 420 MPa. En référence à la figure 14, les vitesses maximales de projectile sont équivalentes à température ambiante et à chaud. Ces résultats s'expliquent par le fait que les bouchons du chargement D se brisent lors d'une déflagration d'allumage du chargement en libérant les canaux à une température Ti < 63°C (correspondant à Tg_{bouchon}<63 °C) et conservent leur propriété élastique Ti > 63°C. A Ti = 63°C, les bouchons obturent donc les canaux et brûlent en libérant progressivement les canaux. A Ti = 21°C, les bouchons se brisent à l'allumage et libèrent la surface des canaux initialement bouchés. Ainsi, pour un même chargement D, la pression maximale à chaud est inférieure à celle obtenue à la température ambiante. On dispose donc d'une possibilité significative d'augmentation de l'énergie du chargement à l'ambiante sans risquer de surpression à chaud.

## Revendications

1. Grain de poudre qui comporte une pluralité de canaux débouchant ou non, au moins un canal étant partiellement ou complètement obturé par au moins un bouchon, ledit au moins bouchon étant constitué d'un matériau dont la température de fusion est supérieure ou égale à la température opérationnelle à chaud maximum du grain de poudre, ledit matériau étant de composition identique à celle ou différente de celle du grain de poudre, étant entendu que lorsqu'au moins un bouchon est constitué d'un matériau de composition différente de celle du grain de poudre, ce matériau est un matériau énergétique ou un matériau inflammable.

2. Grain de poudre selon la revendication 1, dans lequel le ou les bouchons obturant partiellement lesdits canaux est (sont) constitué(s) d'un matériau de composition identique à celle du grain de poudre.

3. Grain de poudre selon la revendication 1, dans lequel le ou les bouchons obturant partiellement lesdits canaux est (sont) constitué(s) d'un matériau de composition différente de celle du grain de poudre.

4. Grain de poudre selon la revendication 1, dans lequel la pluralité de canaux comprend plus d'un bouchon, au moins un bouchon étant constitué d'un matériau de composition identique à celle du grain de poudre, et au moins un bouchon étant constitué d'un matériau de composition différente de celle du grain de poudre.

5. Grain de poudre selon la revendication 3 ou la revendication 4, dans lequel le matériau de composition différente de celle du grain de poudre est constitué d'un matériau énergétique renfermant un liant énergétique, une charge énergétique et éventuellement un plastifiant énergétique.

6. Grain de poudre selon la revendication 5, dans lequel le liant énergétique est de la nitrocellulose, la charge énergétique est choisie parmi l'hexogène, l'octogène, l'éthylène dinitramine, la nitroguanidine ou la dinitramide de guanylurée, et le plastifiant énergétique est choisi parmi la nitroglycérine, le dinitrate de triéthylène glycol ou le dinitrate de diéthylène glycol.

7. Grain de poudre selon la revendication 3 ou la revendication 4, dans lequel le matériau de composition différente de celle du grain de poudre est constitué d'un matériau inflammable choisi parmi un matériau plastifié dérivé de cellulose et un matériau thermoplastique.

8. Grain de poudre selon la revendication 7, dans lequel la température de transition vitreuse du matériau thermoplastique est supérieure à -40°C.

9. Grain de poudre selon l'une quelconque des revendication 1 à 8, dans lequel la composition du grain de poudre est une composition de poudre simple base comprenant de la nitrocellulose ; une composition de poudre double base comprenant de la nitrocellulose et une huile nitrée ; une composition de poudre multibases ; une composition de poudre simple base, double base ou multibases, dopée avec une charge énergétique ; ou bien encore une composition de poudre composite comprenant une charge énergétique et un liant réticulé.

10. Grain de poudre selon l'une quelconque des revendications 1 à 9, dans lequel au moins un bouchon obturant au moins un canal a une longueur inférieure à celle dudit au moins un canal.

11. Grain de poudre selon l'une quelconque des revendications 1 à 10, dans lequel au moins un canal ne comporte pas de bouchon, et/ou au moins deux bouchons sont de longueurs différentes.

12. Grain de poudre selon l'une quelconque des revendications 1 à 11, dont au moins un canal contient deux bouchons espacés, constitués d'un matériau de composition identique ou différente.

13. Chargement de poudre propulsive constitué de grains de poudre selon l'une quelconque des revendications 1 à 12, ou d'un bloc composé desdits grains de poudre.

14. Procédé de préparation de grains de poudre selon l'une quelconque des revendications 1 à 12 qui comprend :
(i) la préparation d'une pâte comprenant les ingrédients de la poudre,
(ii) la préparation d'une pâte comprenant les ingrédients du ou des bouchons,
(iii) le mélange en totalité ou par parties séparées des pâtes obtenues.

## Patentansprüche

1. Pulverkorn, das eine Vielzahl von offenen oder nicht offenen Kanälen aufweist, wobei mindestens ein Kanal teilweise oder vollständig durch mindestens einen Stopfen verschlossen ist, wobei der mindestens eine Stopfen aus einem Material besteht, dessen Schmelztemperatur größer oder gleich der maximalen Heißbetriebstemperatur des Pulverkorns ist, wobei das Material die gleiche oder eine andere Zusammensetzung als die des Pulverkorns aufweist, wobei es sich versteht, dass, wenn mindestens ein Stopfen aus einem Material mit einer anderen Zusammensetzung als das Pulverkorn besteht, dieses Material ein energetisches Material oder ein entzündbares Material ist.

2. Pulverkorn nach Anspruch 1, wobei der Stopfen oder die Stopfen, die die Kanäle teilweise verschließen, aus einem Material mit der gleichen Zusammensetzung als die des Pulverkorns besteht bzw. bestehen.

3. Pulverkorn nach Anspruch 1, wobei der Stopfen oder die Stopfen, die die Kanäle teilweise verschließen, aus einem Material mit einer anderen Zusammensetzung als die des Pulverkorns besteht bzw. bestehen.

4. Pulverkorn nach Anspruch 1, wobei die Vielzahl von Kanälen mehr als einen Stopfen umfasst, wobei mindestens ein Stopfen aus einem Material mit der gleichen Zusammensetzung als die des Pulverkorns besteht und mindestens ein Stopfen aus einem Material mit einer anderen Zusammensetzung als die des Pulverkorns besteht.

5. Pulverkorn nach Anspruch 3 oder 4, wobei das Material mit einer anderen Zusammensetzung als die des Pulverkorns aus einem energetischen Material besteht, das ein energetisches Bindemittel, einen energetischen Füllstoff und gegebenenfalls einen energetischen Weichmacher enthält.

6. Pulverkorn nach Anspruch 5, wobei das energetische Bindemittel Nitrocellulose ist, der energetische Füllstoff ausgewählt ist aus Hexogen, Oktogen, Ethylendinitramin, Nitroguanidin oder Guanylharnstoffdinitramid, und der energetische Weichmacher ausgewählt ist aus Nitroglycerin, Triethylenglykoldinitrat oder Diethylenglykoldinitrat.

7. Pulverkorn nach Anspruch 3 oder 4, wobei das Material mit einer anderen Zusammensetzung als die des Pulverkorns aus einem brennbaren Material besteht, das aus einem plastifizierten, von Zellulose abgeleiteten Material und einem thermoplastischen Material ausgewählt ist.

8. Pulverkorn nach Anspruch 7, wobei die Glasübergangstemperatur des thermoplastischen Materials über -40 °C liegt.

9. Pulverkorn nach einem der Ansprüche 1 bis 8, wobei die Zusammensetzung des Pulverkorns eine einbasige Pulverzusammensetzung ist, die Nitrocellulose umfasst; eine zweibasige Pulverzusammensetzung, die Nitrocellulose und ein nitriertes ÖI umfasst; eine mehrbasige Pulverzusammensetzung; eine einbasige, zweibasige oder mehrbasige Pulverzusammensetzung, die mit einem energetischen Füllstoff dotiert ist; oder eine zusammengesetzte Pulverzusammensetzung, die einen energetischen Füllstoff und ein vernetztes Bindemittel umfasst.

10. Pulverkorn nach einem der Ansprüche 1 bis 9, wobei mindestens ein Stopfen, der mindestens einen Kanal verschließt, eine Länge hat, die kleiner ist als die Länge des mindestens einen Kanals.

11. Pulverkorn nach einem der Ansprüche 1 bis 10, wobei mindestens ein Kanal keinen Stopfen aufweist und/oder mindestens zwei Stopfen unterschiedlich lang sind.

12. Pulverkorn nach einem der Ansprüche 1 bis 11, wobei mindestens ein Kanal zwei voneinander beabstandete Stopfen enthält, die aus einem Material mit gleicher oder unterschiedlicher Zusammensetzung bestehen.

13. Treibladungspulverladung, die aus Pulverkörnern nach einem der Ansprüche 1 bis 12 oder einem aus den Pulverkörnern zusammengesetzten Block besteht.

14. Verfahren zur Herstellung von Pulverkörnern nach einem der Ansprüche 1 bis 12, das Folgendes umfasst:
(i) Herstellen einer Paste, die die Bestandteile des Pulvers umfasst,
(ii) Herstellen einer Paste, die die Bestandteile des/der Stopfen enthält,
(iii) Mischen der erhaltenen Pasten als Ganzes oder in getrennten Teilen.

## Claims

1. A powder grain comprising a plurality of channels which may or may not be open, at least one channel being partially or completely closed by at least one stopper, said at least one stopper being made of a material whose melting temperature is greater than or equal to the maximum hot operating temperature of the powder grain, said material having a composition identical to or different from that of the powder grain, it being understood that when at least one stopper is made of a material having a composition different from that of the powder grain, said material is an energetic material or an inflammable material.

2. The powder grain of claim 1, wherein the stopper or stoppers partially closing said channels is/are made of a material having a composition identical to that of the powder grain.

3. The powder grain of claim 1, wherein the stopper or stoppers partially closing said channels is/are made of a material of a different composition from that of the powder grain.

4. The powder grain of claim 1, wherein the plurality of channels comprises more than one stopper, at least one stopper consisting of a material with a composition identical to that of the powder grain, and at least one stopper consisting of a material with a composition different from that of the powder grain.

5. The powder grain of claim 3 or claim 4, wherein the material with a composition different from that of the powder grain consists of an energetic material containing an energetic binder, an energetic charge and optionally an energetic plasticizer.

6. The powder grain of claim 5, wherein the energetic binder is nitrocellulose, the energetic charge is selected from hexogen, octogen, ethylene dinitramine, nitroguanidine and guanylurea dinitramide, and the energetic plasticizer is selected from nitroglycerine, triethylene glycol dinitrate and diethylene glycol dinitrate.

7. The powder grain of claim 3 or claim 4, wherein the material with a composition different from that of the powder grain consists of a flammable material selected from a plasticized material derived from cellulose and a thermoplastic material.

8. The powder grain of claim 7, wherein the glass transition temperature of the thermoplastic material is greater than -40°C.

9. The powder grain of any one of claims 1 to 8, wherein the powder grain composition is a single-base powder composition comprising nitrocellulose; a double-base powder composition comprising nitrocellulose and a nitro oil; a multi-base powder composition; a single-base, double-base or multi-base powder composition doped with an energetic charge; or a composite powder composition comprising an energetic charge and a cross-linked binder.

10. The powder grain of any one of claims 1 to 9, wherein at least one stopper closing at least one channel has a length less than that of said at least one channel.

11. The powder grain of any one of claims 1 to 10, wherein at least one channel does not comprise a stopper, and/or at least two stoppers are of different lengths.

12. The powder grain of any one of claims 1 to 11, at least one channel of which contains two spaced-apart stoppers made of a material of identical or different composition.

13. A propellant powder charge consisting of powder grains according to any one of claims 1 to 12, or of a block composed of the said powder grains.

14. A process for preparing powder grains according to any one of claims 1 to 12 which comprises:
(i) preparing a paste comprising the powder ingredients,
(ii) preparing a paste comprising the ingredients of the stopper or stoppers,
(iii) mixing all or separate parts of the pastes obtained.
